# EUROPÄISCHE PATENTSCHRIFT

(11) **EP 3 229 597 B1**
(45) Veröffentlichungstag und Bekanntmachung des Hinweises auf die Patenterteilung: **11.07.2018**
(21) Anmeldenummer: 15798417.0
(22) Anmeldetag: 23.11.2015
(51) Int. Cl.: A22C 25/16

(54) **VORRICHTUNG ZUM FREISCHNEIDEN DER FLANKENGRÄTEN VON GEKÖPFTEN, GESCHLACHTETEN UND IN IHRER BAUCHHÖHLE GEÖFFNETEN FISCHEN SOWIE FILETIERMASCHINE MIT EINER SOLCHEN VORRICHTUNG**
DEVICE FOR CUTTING FREE THE FLANK BONES OF DECAPITATED, SLAUGHTERED FISH HAVING OPENED ABDOMINAL CAVITIES, AS WELL AS FILLETING MACHINE HAVING A DEVICE OF THIS TYPE
DISPOSITIF POUR RETIRER LES ARÊTES LATÉRALES DE POISSONS ÉTÊTÉS, TUÉS ET ÉVENTRÉS ET MACHINE À DECOUPER DES FILETS AYANT UN TEL DISPOSITIF

(30) Priorität: 10.12.2014 DE 102014118327
(43) Veröffentlichungstag der Anmeldung: 18.10.2017
(73) Patentinhaber: Nordischer Maschinenbau Rud. Baader GmbH + Co. KG, 23560 Lübeck (DE)
(72) Erfinder: JÜRS, Michael, 23730 Neustadt (DE)
(74) Vertreter: Stork Bamberger Patentanwälte PartmbB
(86) Internationale Anmeldenummer: PCT/EP2015/077353
(87) Internationale Veröffentlichungsnummer: WO 2016/091572

(56) Entgegenhaltungen:
- WO-A1-02/03807
- WO-A1-2009/059759
- DE-A1- 2 747 386
- DE-A1- 3 206 274
- US-A- 3 241 179

## Beschreibung

Die Erfindung betrifft eine Vorrichtung zum Freischneiden der Flankengräten von geköpften, geschlachteten und in ihrer Bauchhöhle geöffneten Fischen, die auf Transportsätteln als Stützkörper zur sicheren Aufnahme der Fische in ihrer Bauchhöhle transportiert werden, umfassend eine obere Grätenführung, eine untere Grätenführung sowie ein Trennaggregat zum Lösen von Fischfilets von den Flankengräten, wobei das Trennaggregat, das aus einer Warteposition in eine Arbeitsposition und umgekehrt bringbar ist, ein Schneidkanten aufweisendes Trennmittel mit korrespondierender Gegenlage umfasst.

Des Weiteren betrifft die Erfindung eine Filetiermaschine zum Filetieren geköpfter, geschlachteter und in ihrer Bauchhöhle geöffneter Fische, umfassend Rückenmesser zum Freilegen der Rückenspeichen bis an die Wirbelsäule heran, Bauchmesser zum Freilegen der Bauchspeichen im Schwanzbereich bis an die Wirbelsäule heran, eine Vorrichtung zum Freischneiden der Flankengräten, Trennmesser zum Trennen des Filets im Schwanzbereich von der Wirbelsäule unter Durchschneiden des von Bauch- und Rückenmessern um die Wirbelsäule belassenen Steges, einen endlosen Förderer zum Transport der Fische Schwanz voraus sowie eine Anzahl auf dem Förderer angeordneter Transportsättel als Stützkörper zur sicheren Aufnahme der Fische in ihrer Bauchhöhle.

Solche Vorrichtungen und Maschinen kommen in der Fisch verarbeitenden Industrie zum Einsatz, um Fische, insbesondere der Spezies Lachs, automatisch zu filetieren. Ein wesentlicher Arbeitsschritt bei der automatisierten Filetierung der Fische ist das Lösen der Filets von den Flankengräten, also den Rippenbögen, die sich zu beiden Seiten der Mittelgräte erstrecken. Zum Lösen der Filets von den Flankengräten werden die Fische mittels der Transportsättel als Stützkörper zur sicheren Aufnahme der Fische in ihrer Bauchhöhle zu den einzelnen Bearbeitungsstationen, u.a. auch der Vorrichtung zum Freischneiden der Flankengräten transportiert. Die Grätenführungen oberhalb und unterhalb des Fisches dienen dazu, den Fisch in der optimalen Bearbeitungsposition auf dem Transportsattel zu halten und zu führen. Zwischen den Schneidkanten des Trennmittels und der Gegenlage ist der Schneidspalt ausgebildet.

Eine solche Vorrichtung zum Freischneiden der Flankengräten ist z.B. aus der WO 2009/059759 A1 aus dem Hause der Anmelderin bekannt. Es wird im Zusammenhang mit der vorliegenden Erfindung explizit Bezug auf die WO-Schrift genommen, die ausführlich den grundsätzlichen Aufbau und die Funktionsweise einer gattungsgemäßen Vorrichtung zum Freischneiden der Flankengräten sowie einer Filetiermaschine beschreibt und deren Offenbarungsgehalt Bestandteil dieser Anmeldung werden soll.

Die Flankengräten erstrecken sich bzw. reichen nicht vollständig um die Bauchhöhle herum. Das bedeutet, dass sich nach dem Köpfen und Schlachten der Fische und dem Öffnen der Bauchhöhle zu beiden Seiten der Mittelgräte jeweils ein Fischfilet erstreckt, das auf den Flankengräten aufliegt und mit diesen verbunden ist. Die Flankengräten erstrecken sich jedoch nicht bis hin zu den freien Enden der Fischfilets. Anders ausgedrückt erstrecken sich die Filets mit ihrem nach unten hängenden Bauchlappen über die Flankengräten hinaus. Die sich am unteren, freien Ende der Fischfilets befindlichen Bauchlappen oder Bauchstreifen werden auch weiße Bauchhaut oder Fettstreifen genannt.

Das Trennmittel taucht beim Freischneiden der Flankengräten etwa im Bereich der freien Enden der Flankengräten in den Fisch ein, so dass die Filets beim Transport durch das Trennmittel von den Flankengräten bis oben hin zur Mittelgräte gelöst werden. Es wird quasi das reine Filet gelöst, während der Bauchlappen/Fettstreifen an den freien Enden der Flankengräten verbleibt. Es hat sich aber gezeigt, dass Nutzer solcher Vorrichtungen und Filetiermaschinen auch Filets mit dem Bauchlappen/Fettstreifen oder Teilen davon ernten möchten.

In solchen Fällen kann das Trennmittel im Bereich der Schneidkanten mittels eines Abdeckelementes teilweise abgedeckt werden, derart, dass mittels des als Bauchlappenabweiser fungierenden Abdeckelements die Position des Einschnittes des Trennmittels in den Fisch verändert wird. Anders ausgedrückt wird durch das Abdeckelement die Position bzw. Lage des Wirkungsbereichs des Trennmittels in Bezug auf den Fisch verändert. Bei den bekannten Vorrichtungen und Filetiermaschinen ist das Abdeckelement fest verschraubt. Mit anderen Worten ist das Abdeckelement auf eine definierte Einstellung, die einer bestimmten Breite des Fettstreifens für ein bestimmtes Produkt bzw. eine bestimmte Produktgröße entspricht, festgelegt. Für den Fall eines Produktwechsels und/oder einer gewünschten Änderung der Breite des Fettstreifens muss das Abdeckelement während des Maschinenstillstands von Hand gelöst, auf die neue Position eingestellt und wieder fixiert werden. Dazu ist in der Regel das Gehäuse der Maschine zu öffnen. Die bekannte Lösung ist somit zeitaufwendig und komplex. Des Weiteren muss die Produktion für die Einstellarbeiten unterbrochen werden.
Der Erfindung liegt somit die Aufgabe zugrunde, eine individuell einsetzbare und leicht handhabbare Vorrichtung zum Freischneiden der Flankengräten vorzuschlagen. Des Weiteren besteht die Aufgabe darin, eine entsprechende Filetiermaschine zu schaffen. Diese Aufgabe wird durch eine Vorrichtung der eingangs genannten Art dadurch gelöst, gemäß dem kennzeichnenden Teil des Anspruchs 1, dass dem Trennmittel ein Abdeckelement zum Abdecken von im Wirkungsbereich des Trennmittels innerhalb des Fisches befindlichen Bereichen der Schneidkante des Trennmittels zugeordnet ist und das Abdeckelement bezüglich seiner Position zum Trennmittel automatisch verstellbar ausgebildet und eingerichtet ist. Mit dem Wirkungsbereich des Trennmittels ist der Bereich, in dem das Trennmittel auf den bzw. in den Fisch trifft und diesen schneidet, beschrieben. Das bedeutet, dass sich mit dem automatisch verstellbaren Abdeckelement der wirksame Bereich der Schneidkante, also der Bereich, mit dem die Flankengräten freigeschnitten werden, verändern lässt. Der Begriff "automatisch" bedeutet in diesem Zusammenhang, dass die Verstellung von außen, also ohne Eingriff in die Vorrichtung, erfolgen kann. Mit der erfindungsgemäßen Ausbildung ist eine einfache und sichere Verstellmöglichkeit geschaffen, mit der von außen quasi online, wahlweise durch eine Bedienperson, die z.B. Proportionalventile betätigt, oder vollautomatisch, z.B. durch Steuerung über zuvor ermittelte Informationen zum zu bearbeitenden Fisch, eine Anpassung der Position des Abdeckelementes in Bezug auf das Trennmittel erfolgen kann, um unterschiedliche Endprodukte, nämlich z.B. reines Filet ohne weiße Bauchhaut, Filet mit maximal breiten Streifen weißer Bauchhaut oder Filet mit einem schmalen Streifen weißer Bauchhaut, zu erhalten. Durch die Verstellbarkeit des Abdeckelementes kann auf eine Produktumstellung ohne Eingriff in die Filetiermaschine, also bei laufender Maschine, schnell reagiert werden, so dass die Vorrichtung zum Freischneiden leicht handhabbar und individuell einsetzbar ist.

Vorteilhafterweise umfasst das Trennmittel zwei Kreismesser mit entsprechender Gegenlage, wobei die beiden Kreismesser und die zugehörige Gegenlage auf einander gegenüber liegenden Seiten des zu bearbeitenden Fisches angeordnet sind und die Kreismesser jeweils um eine Drehachse D₁, D₂ rotierend antreibbar sind, wobei jedem Kreismesser ein Abdeckelement zugeordnet ist, das automatisch aus einer Position, in der der im Wirkungsbereich des Kreismessers innerhalb des Fisches befindliche Bereich der Schneidkante des Kreismessers vollständig freigegeben ist, in eine Position, in der der im Wirkungsbereich des Kreismessers innerhalb des Fisches befindliche Bereich der Schneidkante des Kreismessers mindestens teilweise abgedeckt ist, und zurück bewegbar ist. In dem Fall, in dem das Abdeckelement den Wirkungsbereich des Kreismessers vollständig freigibt, wird das reine Filet ohne weiße Bauchhaut gewonnen. Sobald das Abdeckelement den Wirkungsbereich des Kreismessers auch nur teilweise abdeckt, wird ein Filet mit weißer Bauchhaut gewonnen. Abhängig vom Umfang der Abdeckung kann die Größe/Breite des Streifens weißer Bauchhaut am Filet verändert werden. Zum bzw. beim Abdecken ragt das Abdeckelement über die Schneidkante des Kreismessers hinaus, so dass in dem abgedeckten Bereich ein Schneiden verhindert wird. Damit trifft die wirksame und freie Schneidkante an einer anderen Position auf den Fisch, was zu dem veränderten Schnittergebnis führt.

Eine zweckmäßige Weiterbildung der Erfindung zeichnet sich dadurch aus, dass das Abdeckelement ein mit seiner dem Kreismesser zugewandten Seite flach ausgebildetes und parallel zum Kreismesser verlaufendes Schwenkelement ist, das schwenkbar um Schwenkachsen S₁ bzw. S₂ zwischen den Endpositionen frei und stufenlos verstellbar ausgebildet und eingerichtet ist. Damit ist eine besonders einfache und kompakte Verstellung des Abdeckelementes mit kurzen Verstellwegen und entsprechend kurzen Reaktionszeiten realisierbar. Durch eine einfache Schwenkbewegung um die Schwenkachsen S₁ und S₂ herum ist ein schnelles und präzises Verändern des aktiven Wirkungsbereiches der Kreismesser erzielbar.

Eine bevorzugte Ausführungsform ist dadurch gekennzeichnet, dass sich die Drehachsen D₁, D₂ der Kreismesser einerseits und die Schwenkachsen S₁, S₂ der den Kreismessern zugeordneten Abdeckelementen andererseits entsprechen, also D₁=S₁ und D₂=S₂ ist. Anders ausgedrückt drehen bzw. schwenken das Kreismesser und das zugehörige Abdeckelement jeweils um die gleiche Achse, was eine besonders kompakte und präzise Verstellung ermöglicht.

Zweckmäßigerweise ist jedes Abdeckelement mittels einer Flanschverbindung oder dergleichen auf einer Achse mit der Schwenkachse S₁ bzw. S₂ gelagert und mittels eines mechanisch und/oder pneumatisch steuerbaren Betätigungsmechanismus schwenkbar. Mit der Flanschverbindung oder dergleichen wird zum Ausdruck gebracht, dass jedes Abdeckelement mit einer herkömmlichen Konstruktion an der bzw. auf der Achse angeordnet sein kann. Mit dem Betätigungsmechanismus lässt sich die Verstellung von außen besonders einfach und kompakt realisieren.

Eine Weiterbildung ist dadurch gekennzeichnet, dass der Betätigungsmechanismus eine mechanische Feder und einen Pneumatikzylinder umfasst. Diese Ausbildung unterstützt die zuvor genannten Vorteile.

Eine bevorzugte Ausführungsform sieht vor, dass die Feder eine lineare Federkonstante aufweist und der Pneumatikzylinder bezüglich seiner Zylinderkraft einstellbar ausgebildet und eingerichtet ist. Mit der Feder kann das Abdeckelement auf einfache Weise in einer Endposition gehalten werden, während mittels des Pneumatikzylinders eine stufenlose Verstellung gegen die Federkraft der Feder gewährleistet ist. Damit ist eine besonders leichte Handhabung sichergestellt, die insbesondere von außen eine Verstellung ermöglicht.

Vorteilhafterweise kann der Betätigungsmechanismus zwei Federn umfassen, wobei eine Feder eine Federkonstante und die andere Feder eine einstellbare Federkraft aufweist. Mit der von außen einstellbaren zweiten Feder ist eine alternative Verstellmöglichkeit vorgeschlagen, mittels der ebenfalls die zuvor genannten Vorteile erzielt werden.

Die Aufgabe wird auch durch eine Filetiermaschine der eingangs genannten Art dadurch gelöst, dass die Vorrichtung zum Freischneiden der Flankengräten nach einem der Ansprüche 1 bis 8 ausgebildet und eingerichtet ist. Die sich daraus ergebenden Vorteile wurden bereits im Zusammenhang mit der Vorrichtung zum Freischneiden der Flankengräten beschrieben, weshalb zur Vermeidung von Wiederholungen auf die entsprechenden Passagen verwiesen wird.

Eine besonders bevorzugte Ausführungsform zeichnet sich dadurch aus, dass die Filetiermaschine eine Maschinensteuerung zur Steuerung der Messer umfasst, wobei der Betätigungsmechanismus für die Abdeckelemente ebenfalls mittels der Maschinensteuerung steuerbar ist. Damit ist eine abgestimmte Einstellung sämtlicher Stellkomponenten gewährleistet.

Weitere zweckmäßige und/oder vorteilhafte Merkmale und Weiterbildungen der Erfindung ergeben sich aus den Unteransprüchen und der Beschreibung. Eine besonders bevorzugte Ausführungsform der Erfindung wird anhand der beigefügten Zeichnung näher erläutert. In der Zeichnung zeigt:
- Fig. 1: eine perspektivische Ansicht einer erfindungsgemäßen Vorrichtung in einem Stadium, in dem ein Fisch auf die Kreismesser trifft, mit einem Abdeckelement in zurückgezogener, den Wirkungsbereich der Kreismesser vollständig freigebender Position,
- Fig. 2: eine perspektivische Ansicht einer erfindungsgemäßen Vorrichtung in einem Stadium, in dem ein Fisch auf die Kreismesser trifft, mit einem Abdeckelement in einer den Wirkungsbereich der Kreismesser teilweise abdeckenden Position, und
- Fig. 3: eine schematische Darstellung eines Kreismessers mit zugeordnetem Abdeckelement und einem zugehörigen Betätigungsmechanismus.

Die in der Zeichnung dargestellte Vorrichtung dient zum Freischneiden der Flankengräten von geköpften, geschlachteten und in ihrer Bauchhöhle geöffneten Lachsen, die in Fischlaufrichtung Schwanz voraus transportiert werden. Die Vorrichtung kann jedoch selbstverständlich auch zum Lösen der Filets von Flankengräten anderer Fischspezies eingesetzt werden. Auch ist ein Einsatz bei Fischen, die in Fischlaufrichtung Kopf voraus transportiert werden, möglich. Die beschriebene Vorrichtung kann als Einzelkomponente oder als integraler Bestandteil einer Filetiermaschine eingesetzt werden.

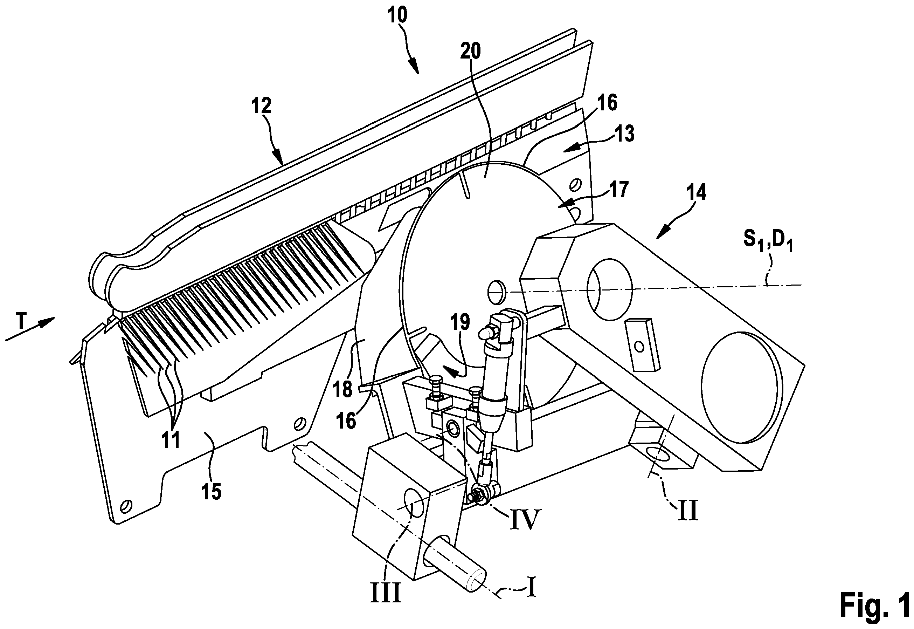

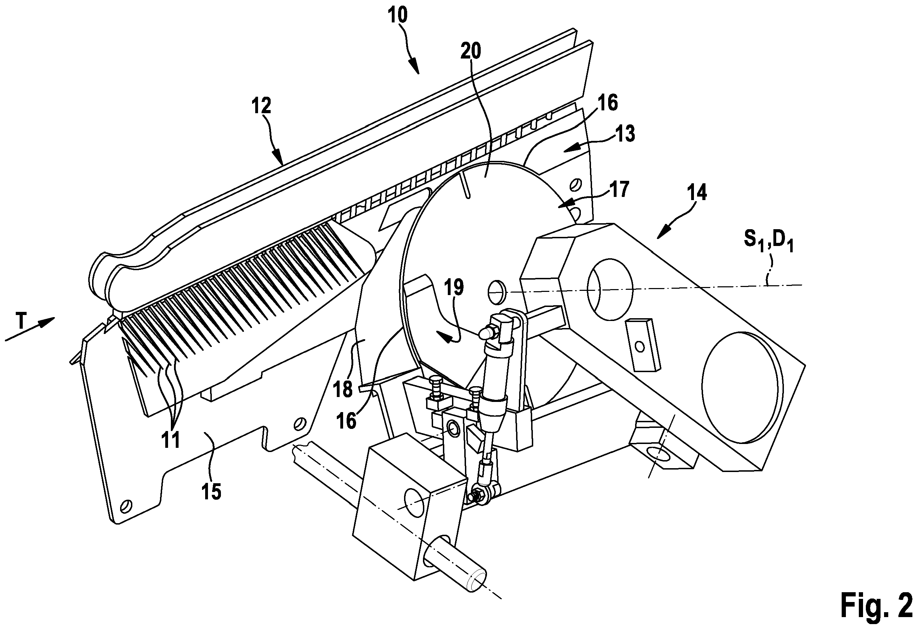

Bei der in den Figuren 1 und 2 dargestellten Vorrichtung 10 zum Freischneiden der Flankengräten 11 wird der besseren Übersicht halber nur die Bearbeitung einer Fischseite dargestellt und beschrieben. Die Vorrichtung 10 kann darauf auch beschränkt sein. Vorzugsweise erfolgt aber eine synchrone Bearbeitung beider Fischseiten durch einander gegenüberliegende und sich entsprechende Komponenten der Vorrichtung 10. Die beiden Filets eines Fisches werden vorzugsweise zeitglich, optional jedoch auch zeitversetzt von den Flankengräten 11 freigeschnitten. Alternativ können auch zwei auf gegenüberliegenden Seiten eines Fisches angeordnete Vorrichtungen 10 eine gemeinsame Vorrichtung bilden, wobei die Bearbeitung auf beiden Seiten synchronisiert oder unabhängig voneinander erfolgen kann. Der besseren Übersicht halber wurden auch die Filets selbst nicht dargestellt, um den Blick auf die konstruktiven Komponenten der Vorrichtung 10 freizugeben.

Die Vorrichtung 10 umfasst eine obere Grätenführung 12, eine untere Grätenführung 13 sowie ein Trennaggregat 14 zum Lösen von Fischfilets von den Flankengräten 11. Mittels der Grätenführungen 12, 13 wird der zu bearbeitenden Fisch, der üblicherweise auf einem Transportsattel 15 als Stützkörper in den Bereich des Trennaggregats 14 transportiert wird, in einer definierten Position gehalten, derart, dass der Fisch in Bezug auf das Trennaggregat 14 in einer definierten Lage liegt. Das Trennaggregat 14, das aus einer Warteposition in eine Arbeitsposition und umgekehrt bringbar ist, umfasst ein Schneidkanten 16 aufweisendes Trennmittel 17 mit korrespondierender Gegenlage 18. In der Warteposition ist ein Eingriff des Trennmittels 17 in den Fisch verhindert. In der Arbeitsposition ist das Trennmittel 17 zum Eingriff in den Fisch positioniert. Dazu weist das Trennaggregat 14 und/oder jedes Trennmittel 17 mit korrespondierender Gegenlage 18 mindestens einen Freiheitsgrad, vorzugsweise jedoch mehrere Freiheitsgrade auf.

Diese Vorrichtung 10 zeichnet sich erfindungsgemäß dadurch aus, dass dem Trennmittel 17 ein Abdeckelement 19 zum Abdecken von im Wirkungsbereich des Trennmittels 17 innerhalb des Fisches befindlichen Bereichen der Schneidkante 16 des Trennmittels 17 zugeordnet ist und das Abdeckelement 19 bezüglich seiner Position zum Trennmittel 17 automatisch verstellbar ausgebildet und eingerichtet ist. Das Abdeckelement 19 lässt sich von außen relativ zum Trennmittel 17 verstellen, um je nach Bedarf mal mehr oder mal weniger von der Schneidkante 16 abzudecken, um die Schnittführung zu verändern bzw. unterschiedliche Schnittergebnisse zu erzielen, nämlich z.B. reine Filets, Filets mit schmalem Streifen weißer Bauchhaut oder Filets mit maximal breitem Streifen weißer Bauchhaut. Dazu kann z.B. eine Bedienperson Betätigungselemente auslösen, beispielsweise in Form von Proportionalventilen, die zur automatischen Verstellung des Abdeckelementes 19 führen. Die Verstellung kann auch vollautomatisch erfolgen, indem das Abdeckelement 19 auf der Basis zuvor ermittelter Informationen zum zu bearbeitenden Fisch gesteuert wird.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung zusammengefasst oder in einer gemeinsamen Ausführungsform beschrieben sind, auch funktional eigenständig die weiter oben beschriebene Vorrichtung 10 weiterbilden können.

Das Trennmittel 17 umfasst vorzugsweise zwei Kreismesser 20 mit entsprechender Gegenlage 18. Die beiden Kreismesser 20 und die zugehörige Gegenlage 18 sind auf einander gegenüber liegenden Seiten des zu bearbeitenden Fisches angeordnet. Die Kreismesser 20 sind jeweils um eine Drehachse D₁, D₂ rotierend antreibbar, und zwar mit variabler Drehzahl mittels nicht dargestellten Antrieben. Die Gegenlagen 18 sind in Fischlaufrichtung T vor dem Kreismesser 20 angeordnet. Vorzugsweise sind Kreismesser 20 und Gegenlage 18 gemeinsam aus der Warteposition in die Arbeitsposition und zurück bewegbar. Jedem Kreismesser 20 ist ein Abdeckelement 19 zugeordnet, das automatisch aus einer Position, in der der im Wirkungsbereich des Kreismessers 20 innerhalb des Fisches befindliche Bereich der Schneidkante 16 des Kreismessers 20 vollständig freigegeben ist (siehe z.B. Figur 1), in eine Position, in der der im Wirkungsbereich des Kreismessers innerhalb des Fisches befindliche Bereich der Schneidkante des Kreismessers 20 mindestens teilweise abgedeckt ist (siehe z.B. Figur 2), und zurück bewegbar ist. Das Abdeckelement 19 weist zur Bildung zweier Endpositionen Endanschläge auf, um die Bewegung des Abdeckelementes 19 zu begrenzen.

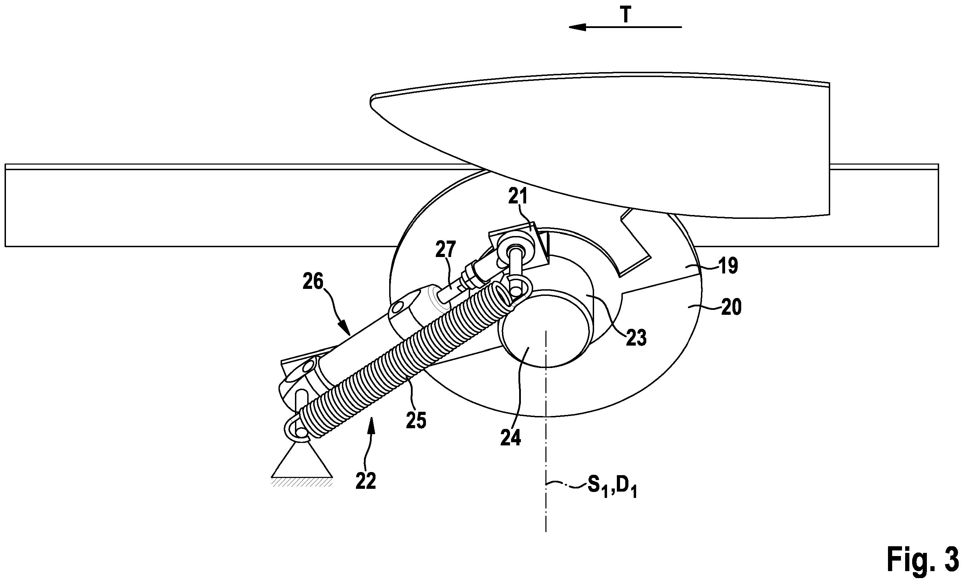

Vorzugsweise ist das Abdeckelement 19 ein mit seiner dem Kreismesser 20 zugewandten Seite flach ausgebildetes und parallel zum Kreismesser 20 verlaufendes Schwenkelement, das schwenkbar um Schwenkachsen S₁ bzw. S₂ zwischen den Endpositionen frei und stufenlos verstellbar ausgebildet und eingerichtet ist. Das plattenförmige Abdeckelement 19 ist beispielsweise ein flacher, spatel- oder fingerförmiger Stahlkörper, dessen äußere Kontur einen Radius beschreibt, der etwa dem Radius des Kreismessers 20 entspricht. Die durch das Kreismesser 20 und die flache Seite des Abdeckelementes 19 aufgespannten Ebenen verlaufen im Wesentlichen parallel. Durch das Schwenken des Abdeckelementes 19 um die Schwenkachsen S₁, S₂ wandert das Abdeckelement 19 zum zunehmenden Abdecken der Schneidkanten 16 in der Ausführungsform gemäß der Figuren 1 und 2 im Uhrzeigersinn relativ zum Kreismesser 20. Zum zunehmenden Freigeben der Schneidkanten 16 wandert das Abdeckelement 19 entgegen dem Uhrzeigersinn. Die Abdeckelemente 19 können auch eine andere Form und Zuordnung zum Kreismesser 20 aufweisen und beispielsweise auch linear bewegbar bzw. verschiebbar sein. Der Drehsinn des Abdeckelementes 19 zum Abdecken bzw. Freigeben der Schneidkanten 16 kann in anderen Ausführungen z.B. gemäß Figur 3 auch umgekehrt sein.

In der dargestellten Ausführungsform entsprechen sich die Drehachsen D₁, D₂ der Kreismesser 20 einerseits und die Schwenkachsen S₁, S₂ der den Kreismessern 20 zugeordneten Abdeckelemente 19 andererseits. Die Drehachse D₁ entspricht also der Schwenkachse S₁, indem D₁ und S₁ die gleiche Ausrichtung aufweisen und fluchtend zueinander liegen. Entsprechendes gilt für die Drehachse D₂ und die Schwenkachse S₂. Die Drehachsen D₁, D₂ können aber auch versetzt, geneigt oder anderweitig abweichend von den jeweils zugeordneten Schwenkachsen S₁, S₂ ausgerichtet sein. Aus Gründen der Darstellung sind die Achsen S₂ und D₂ in den Figuren nicht benannt.

Jedes Abdeckelement 19 ist mittels einer Flanschverbindung 21 oder dergleichen auf einer Achse mit der Schwenkachse S₁ bzw. S₂ gelagert und mittels eines mechanischen und/oder pneumatischen Betätigungsmechanismus 22 schwenkbar. Anders ausgedrückt ist das Abdeckelement 19 drehbar, und zwar unabhängig von dem Kreismesser 20, relativ zu diesem verstellbar gelagert. Das kann z.B. durch eine rohrförmige Hülse 23 als Bestandteil der Flanschverbindung 21 realisiert sein, wobei die Hülse 23 auf der Antriebsachse/der Antriebswelle 24 des Kreismessers 20 gelagert ist. Über den Betätigungsmechanismus 22 ist das Abdeckelement 19 dann stufenlos und automatisch relativ zum Kreismesser 20 verstellbar. In der gezeigten Ausführungsform erfolgt die Verstellung der Abdeckung 19 ausschließlich um die Schwenkachse S₁, S₂. In weiteren Ausführungsformen kann auch eine radiale Verstellung oder eine kombinierte Verstellung realisiert sein.

Bevorzugt umfasst der Betätigungsmechanismus 22 eine mechanische Feder 25 und einen Pneumatikzylinder 26 (siehe z.B. Figur 3). Die Versorgungsanschlüsse für den Pneumatikzylinder 26 sind der Einfachheit und besseren Übersicht halber nicht dargestellt. Die Feder 25 weist eine lineare Federkonstante auf und ist mit einem Ende an der Flanschverbindung 21 und mit dem anderen Ende an einer nicht dargestellten Gehäusewand oder einem anderen festen Anlenkpunkt befestigt, beispielsweise dem Befestigungspunkt des Pneumatikzylinders 26 selbst (siehe z.B. Figur 3). Der Pneumatikzylinder 26 ist bezüglich seiner Zylinderkraft einstellbar ausgebildet und eingerichtet. Der Kolben 27 des Pneumatikzylinders 26 ist an der Flanschverbindung 21 befestigt. Der Druck des Pneumatikzylinders 26 ist variabel einstellbar und wird mit der Federkraft der Feder 25 ins Gleichgewicht gebracht, bis sich die gewünschte Stellung des Abdeckelementes 19, das auch als Bauchlappenabweiser bezeichnet werden kann, ergibt. Optional kann der Pneumatikzylinder 26 auch durch eine zweite Feder ersetzt werden, die dann eine von außen einstellbare Federkraft aufweist.

Wie weiter oben erwähnt, sind die Kreismesser 20 und die Gegenlagen 18 verstellbar ausgebildet. Vorzugsweise sind die Kreismesser 20 und die Gegenlagen 18 um zwei Achsen schwenkbar, um einerseits aus der Warteposition in die Arbeitsposition und zurück bewegbar zu sein und andererseits die notwendigen Schnittbewegungen ausführen zu können. Vorzugsweise weist das Trennaggregat 14 insgesamt vier Freiheitsgrade auf, nämlich um die Schwenkachsen I, II, III und IV. Um die Schwenkachse I sind das Kreismesser 20 und die Gegenlage 18 in Bezug auf die Transportebene der Fische auf und ab bewegbar. Um die Schwenkachse II ist das Kreismesser 20 auf die Grätenführungen 12, 13 zu und von diesen weg bewegbar. Um die Schwenkachse III und IV ist die Gegenlage 18 auf die Grätenführungen 12, 13 zu und von diesen weg bewegbar. Sämtliche Bewegungen sind einander überlagerbar.

Wie erwähnt, kann die Vorrichtung 10 als so genannte stand-alone-Vorrichtung eingesetzt werden. Vorzugsweise ist die Vorrichtung 10 jedoch integraler Bestandteil einer Filetiermaschine zum Filetieren geköpfter, geschlachteter und in ihrer Bauchhöhle geöffneter Fische, umfassend Rückenmesser zum Freilegen der Rückenspeichen bis an die Wirbelsäule heran, Bauchmesser zum Freilegen der Bauchspeichen im Schwanzbereich bis an die Wirbelsäule heran, eine Vorrichtung 10 zum Freischneiden der Flankengräten, Trennmesser zum Trennen des Filets im Schwanzbereich von der Wirbelsäule unter Durchschneiden des von Bauch- und Rückenmessern um die Wirbelsäule belassenen Steges, einen endlosen Förderer zum Transport der Fische Schwanz voraus sowie eine Anzahl auf dem Förderer angeordneter Transportsättel 15 als Stützkörper zur sicheren Aufnahme der Fische in ihrer Bauchhöhle. Erfindungsgemäß ist die Vorrichtung 10 nach einem der Ansprüche 1 bis 8 ausgebildet, wie sie zuvor detailliert beschrieben wurde.

Die Filetiermaschine kann des Weiteren eine Maschinensteuerung umfassen, mittels der mindestens sämtliche Messer steuerbar sind. Optional ist der Betätigungsmechanismus 22 für das Abdeckelement 19 mit der Maschinensteuerung verbunden, so dass das Abdeckelement 19 ebenfalls mittels der Maschinensteuerung steuerbar ist.

## Patentansprüche

1. Vorrichtung (10) zum Freischneiden der Flankengräten (11) von geköpften, geschlachteten und in ihrer Bauchhöhle geöffneten Fischen, die auf Transportsätteln (15) als Stützkörper zur sicheren Aufnahme der Fische in ihrer Bauchhöhle transportiert werden, umfassend eine obere Grätenführung (12), eine untere Grätenführung (13) sowie ein Trennaggregat (14) zum Lösen von Fischfilets von den Flankengräten (11), wobei das Trennaggregat (14), das aus einer Warteposition in eine Arbeitsposition und umgekehrt bringbar ist, ein Schneidkanten (16) aufweisendes Trennmittel (17) mit korrespondierender Gegenlage (18) umfasst, d ad u rc h **gekennzeichnet**, dass dem Trennmittel (17) ein Abdeckelement (19) zum Abdecken von im Wirkungsbereich des Trennmittels (17) innerhalb des Fisches befindlichen Bereichen der Schneidkante (16) des Trennmittels (17) zugeordnet ist und das Abdeckelement (19) bezüglich seiner Position zum Trennmittel (17) automatisch verstellbar ausgebildet und eingerichtet ist.

2. Vorrichtung nach Anspruch 1, **dadurch gekennzeichnet, dass** das Trennmittel (17) zwei Kreismesser (20) mit entsprechender Gegenlage (18) umfasst, wobei die beiden Kreismesser (20) und die zugehörige Gegenlage (18) auf einander gegenüber liegenden Seiten des zu bearbeitenden Fisches angeordnet sind und die Kreismesser (20) jeweils um eine Drehachse D₁, D₂ rotierend antreibbar sind, wobei jedem Kreismesser (20) ein Abdeckelement (19) zugeordnet ist, das automatisch aus einer Position, in der der im Wirkungsbereich des Kreismessers (20) innerhalb des Fisches befindliche Bereich der Schneidkante (16) des Kreismessers (20) vollständig freigegeben ist, in eine Position, in der der im Wirkungsbereich des Kreismessers (20) innerhalb des Fisches befindliche Bereich der Schneidkante (16) des Kreismessers (20) mindestens teilweise abgedeckt ist, und zurück bewegbar ist.

3. Vorrichtung nach Anspruch 2, **dadurch gekennzeichnet, dass** das Abdeckelement (19) ein mit seiner dem Kreismesser (20) zugewandten Seite flach ausgebildetes und parallel zum Kreismesser (20) verlaufendes Schwenkelement ist, das schwenkbar um Schwenkachsen S₁ bzw. S₂ zwischen den Endpositionen frei und stufenlos verstellbar ausgebildet und eingerichtet ist.

4. Vorrichtung nach Anspruch 3, **dadurch gekennzeichnet, dass** sich die Drehachsen D₁, D₂ der Kreismesser (20) einerseits und die Schwenkachsen S₁, S₂ der den Kreismessern (20) zugeordneten Abdeckelemente (19) andererseits entsprechen, also D₁=S₁ und D₂=S₂ ist.

5. Vorrichtung nach einem der Ansprüche 3 oder 4, **dadurch gekennzeichnet, dass** jedes Abdeckelement (19) mittels einer Flanschverbindung (21) oder dergleichen auf einer Achse mit der Schwenkachse S₁ bzw. S₂ gelagert und mittels eines mechanisch und/oder pneumatisch steuerbaren Betätigungsmechanismus (22) schwenkbar ist.

6. Vorrichtung nach Anspruch 5, **dadurch gekennzeichnet, dass** der Betätigungsmechanismus (22) eine mechanische Feder (25) und einen Pneumatikzylinder (26) umfasst.

7. Vorrichtung nach Anspruch 6, **dadurch gekennzeichnet, dass** die Feder (25) eine lineare Federkonstante aufweist und der Pneumatikzylinder (26) bezüglich seiner Zylinderkraft einstellbar ausgebildet und eingerichtet ist.

8. Vorrichtung nach Anspruch 5, **dadurch gekennzeichnet, dass** der Betätigungsmechanismus (26) zwei Federn umfasst, wobei eine Feder eine Federkonstante und die andere Feder eine einstellbare Federkraft aufweist.

9. Filetiermaschine zum Filetieren geköpfter, geschlachteter und in ihrer Bauchhöhle geöffneter Fische, umfassend Rückenmesser zum Freilegen der Rückenspeichen bis an die Wirbelsäule heran, Bauchmesser zum Freilegen der Bauchspeichen im Schwanzbereich bis an die Wirbelsäule heran, eine Vorrichtung zum Freischneiden der Flankengräten, Trennmesser zum Trennen des Filets im Schwanzbereich von der Wirbelsäule unter Durchschneiden des von Bauch- und Rückenmessern um die Wirbelsäule belassenen Steges, einen endlosen Förderer zum Transport der Fische Schwanz voraus sowie eine Anzahl auf dem Förderer angeordneter Transportsättel als Stützkörper zur sicheren Aufnahme der Fische in ihrer Bauchhöhle, **dadurch gekennzeichnet, dass** die Vorrichtung (10) zum Freischneiden der Flankengräten (11) nach einem der Ansprüche 1 bis 8 ausgebildet und eingerichtet ist.

10. Filetiermaschine nach Anspruch 9, **dadurch gekennzeichnet, dass** die Filetiermaschine eine Maschinensteuerung zur Steuerung der Messer umfasst, wobei der Betätigungsmechanismus (22) für die Abdeckelemente (19) ebenfalls mittels der Maschinensteuerung steuerbar ist.

## Claims

1. Apparatus (10) for cutting free the flank bones (11) of decapitated, slaughtered fish with opened abdominal cavities which are transported on transport saddles (15) as supporting bodies for securely receiving the fish in their abdominal cavities, comprising an upper bone guide (12), a lower bone guide (13) and a separating assembly (14) for releasing fish fillets from the flank bones (11), wherein the separating assembly (14), which can be brought from a standby position into a working position and vice versa, comprises a separating means (17) having cutting edges (16) and with a corresponding counter-surface (18), **characterised in that** a covering element (19), for covering regions of the cutting edge (16) of the separating means (17) located in the effective region of the separating means (17) inside the fish, is assigned to the separating means (17), and the covering element (19) is designed and configured such that it can be automatically adjusted with respect to its position in relation to the separating means (17).

2. Apparatus according to claim 1, **characterised in that** the separating means (17) comprises two circular knives (20) with corresponding counter-surface (18), wherein the two circular knives (20) and the associated counter-surface (18) are arranged on opposing sides of the fish to be processed, and the circular knives (20) are each rotatably drivable about a rotary axis D₁, D₂, wherein a covering element (19) is assigned to each circular knife (20), said covering element being automatically movable from a position in which the region of the cutting edge (16) of the circular knife (20) located in the effective region of the circular knife (20) inside the fish is completely exposed, into a position in which the region of the cutting edge (16) of the circular knife (20) located in the effective region of the circular knife (20) inside the fish is at least partially covered, and back again.

3. Apparatus according to claim 2, **characterised in that** the covering element (19) is a pivot element with its side directed towards the circular knife (20) being flat and running parallel to said circular knife (20), said pivot element being designed and configured to be pivotable about pivot axes S₁ and S₂ and freely and continuously movable between the end positions.

4. Apparatus according to claim 3, **characterised in that** the rotary axes D₁, D₂ of the circular knives (20) on the one hand and the pivot axes S₁, S₂ of the covering elements (19) assigned to said circular knives (20) on the other hand correspond to each other, that is D₁=S₁ and D₂=S₂.

5. Apparatus according to claim 3 or 4, **characterised in that** each covering element (19) is supported by means of a flanged connection (21) or similar on an axle having the pivot axis S₁ and S₂ respectively and is pivotable by means of a mechanically and/or pneumatically controllable actuating mechanism (22).

6. Apparatus according to claim 5, **characterised in that** the actuating mechanism (22) comprises a mechanical spring (25) and a pneumatic cylinder (26).

7. Apparatus according to claim 6, **characterised in that** the spring (25) has a linear spring constant and the pneumatic cylinder (26) is designed and configured to be adjustable with respect to its cylinder force.

8. Apparatus according to claim 5, **characterised in that** the actuating mechanism (26) comprises two springs, wherein one spring has a spring constant and the other spring has an adjustable spring force.

9. Filleting machine for filleting decapitated, slaughtered fish with opened abdominal cavities, comprising dorsal knives for exposing the dorsal spokes up to the spine, ventral knives for exposing the ventral spokes up to the spine in the tail region, an apparatus for cutting free the flank bones, separating knives for separating the fillet from the spine in the tail region by cutting through the ligament around the spine left by the ventral and dorsal knives, an endless conveyor for transporting the fish tail-first as well as a number of transport saddles arranged on the conveyor as supporting bodies for securely receiving the fish in their abdominal cavities, **characterised in that** the apparatus (10) for cutting free the flank bones (11) is designed and configured according to one of claims 1 to 8.

10. Filleting machine according to claim 9, **characterised in that** the filleting machine comprises a machine controller for controlling the knives, wherein the actuating mechanism (22) for the covering elements (19) is also controllable by means of the machine controller.

## Revendications

1. Un dispositif (10) destiné à dégager les arrêtes de flanc (11) de poissons étêtés, tués et éventrés qui sont transportés sur des selles de transport (15) utilisés comme éléments de support pour recevoir de façon sûre les poissons au niveau de leur cavité abdominale, comprenant un guide d'arête supérieur (12), un guide d'arête inférieur (13) et une unité de séparation (14) pour détacher des filets de poisson des arêtes latérales (11), dans lequel l'unité de séparation (14), qui peut être amenée d'une position d'attente en une position de travail et inversement, comporte un moyen de séparation (17) qui comporte des bords de coupe (16) et une contre-surface correspondante (18), **caractérisé en ce qu'**un élément de recouvrement (19) recouvrant les zones du bord de coupe (16) du moyen de séparation (17) qui se trouvent dans la zone d'action du moyen de séparation (17) à l'intérieur du poisson et l'élément de recouvrement (19) est associé au moyen de séparation (17), et **en ce que** l'élément de recouvrement (19) est disposé et réalisé pour être réglable automatiquement par rapport à sa position vis-à-vis du moyen de séparation (17).

2. Un dispositif selon la revendication 1, **caractérisé en ce que** le moyen de séparation (17) comprend deux lames circulaires (20) comportant une contre-surface (18) correspondante, dans lequel les deux lames circulaires (20) et la contre-surface (18) correspondante sont disposées sur des faces opposées du poisson à traiter et les lames circulaires (20) peuvent être entraînées en tournant respectivement autour d'un axe de rotation D₁, D₂, dans lequel un élément de recouvrement (19) est associé à chaque lame circulaire (20), cet élément pouvant être déplacé automatiquement d'une position dans laquelle la partie du bord de coupe (16) de la lame circulaire (20) se trouvant dans la zone d'action de la lame circulaire (20) à l'intérieur du poisson est totalement libérée à une position dans laquelle la partie du bord de coupe (16) de la lame circulaire (20) se trouvant dans la zone d'action de la lame circulaire (20) à l'intérieur du poisson est au moins partiellement recouverte, et inversement.

3. Un dispositif selon la revendication 1 ou 2, **caractérisé en ce que** l'élément de recouvrement (19) est un élément pivotant formé de façon plane et parallèle à la lame circulaire (20) avec sa face tournée vers la lame circulaire (20), disposé et réalisé de façon à pouvoir à être réglé librement et de manière continue entre les positions finales en pivotant autour des axes de pivotement S₁ ou S₂.

4. Un dispositif selon la revendication 3, **caractérisé en ce que** les axes de rotation D₁, D₂ des lames circulaires (20) d'un côté correspondent aux axes de pivotement S₁, S₂ des éléments de recouvrement (19) affectés aux lames circulaires (20) d'un autre côté, soit D₁=S₁ et D₂=S₂.

5. Un dispositif selon l'une des revendications 1 à 5, **caractérisé en ce que** chaque élément de recouvrement (19) est placé sur un axe avec l'axe de rotation S₁ ou S₂ à l'aide d'un raccord à brides (21) ou d'un élément similaire et peut être pivoté à l'aide d'un mécanisme d'actionnement (22) à commande mécanique et/ou pneumatique.

6. Un dispositif selon la revendication 5, **caractérisé en ce que** le mécanisme d'actionnement (22) comprend un ressort mécanique (25) et un cylindre pneumatique (26).

7. Un dispositif selon la revendication 6, **caractérisé en ce que** le ressort (25) dispose d'une constante d'élasticité linéaire et le cylindre pneumatique (26) est disposé et réalisé de façon réglable en ce qui concerne sa puissance de cylindre.

8. Un dispositif selon la revendication 5, **caractérisé en ce que** le mécanisme d'actionnement (26) comprend deux ressorts, l'un des ressorts disposant d'une constante d'élasticité et l'autre ressort d'une élasticité réglable.

9. Une machine à fileter permettant de lever les filets de poissons étêtés, tués et éventrés, comprenant des lames dorsales permettant de libérer les rayons dorsaux jusqu'à la colonne vertébrale, des lames ventrales permettant de libérer les rayons abdominaux dans la zone de la queue jusqu'à la colonne vertébrale, un dispositif de découpe libératoire des arêtes de flanc, des lames de coupe permettant de séparer les filets de la colonne vertébrale dans la zone de la queue en coupant les nervures ayant été laissées autour de la colonne vertébrale par les lames dorsales et abdominales, un convoyeur sans fin permettant de transporter les poissons queue par l'avant ainsi que plusieurs selles de transport disposés sur le convoyeur comme éléments de support pour recevoir de façon sûre les poissons au niveau de leur cavité abdominale, **caractérisée en ce que** le dispositif (10) de découpe libératoire des arêtes de flanc (11) est disposé et réalisé selon l'une des revendications 1 à 8.

10. Une machine à fileter selon la revendication 9, **caractérisée en ce que** la machine à fileter comprend une commande de machine permettant de commander les lames, dans laquelle le mécanisme d'actionnement (22) des éléments de recouvrement (19) peut aussi être commandé à l'aide de la commande de machine.
